(19) Europäisches Patentamt
European Patent Office
Office européen des brevets

(11) EP 4 506 418 A1

(12) **EUROPEAN PATENT APPLICATION**
published in accordance with Art. 153(4) EPC

(43) Date of publication:
**12.02.2025 Bulletin 2025/07**

(21) Application number: **23774448.7**

(22) Date of filing: **03.03.2023**

(51) International Patent Classification (IPC):
***C08L 69/00*** *(2006.01)* ***C08L 9/00*** *(2006.01)*
***C08L 21/00*** *(2006.01)* ***C08L 25/04*** *(2006.01)*
***C08L 53/00*** *(2006.01)*

(52) Cooperative Patent Classification (CPC):
**C08L 9/00; C08L 21/00; C08L 25/04; C08L 53/00; C08L 69/00**

(86) International application number:
**PCT/JP2023/008041**

(87) International publication number:
**WO 2023/181849 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2022 JP 2022045579**

(71) Applicant: **Mitsubishi Chemical Corporation**
**Tokyo 100-8251 (JP)**

(72) Inventor: **NISHINO, Yohei**
**Hiratsuka-shi, Kanagawa 254-0016 (JP)**

(74) Representative: **Vossius & Partner**
**Patentanwälte Rechtsanwälte mbB**
**Siebertstrasse 3**
**81675 München (DE)**

(54) **POLYCARBONATE RESIN COMPOSITION AND ANTENNA MEMBER**

(57) A polycarbonate resin composition comprising, relative to 100 parts by mass of a polycarbonate resin (A), 30 to 150 parts by mass of a polystyrenic resin (B) and 3 to 60 parts by mass of an elastomer (C), the polycarbonate resin (A) comprising a bisphenol A polycarbonate (A1) and a polycarbonate (A2) having a specific structural unit at a mass ratio (A2/A1) in content of 5/95 to 80/20, a molded article and an antenna member.

EP 4 506 418 A1

## Description

[Technical Field]

The present invention relates to a polycarbonate resin composition and an antenna member, and specifically relates to a polycarbonate resin composition with low relative permittivity and dielectric loss tangent, high impact resistance, and excellent heat resistance, rigidity, and hardness, as well as a molded article thereof, and an antenna member.

[Background Art]

The speed and capacity of the signals used are increasing in electronic apparatuses, including mobile communication devices and base station devices thereof, network infrastructure devices, such as servers and routers, and large computers. In addition to the electronic apparatuses mentioned above, systems that handle high-frequency radio signals are being put to practical use in the automotive and transportation system-related fields, as well as in the field of indoor short-range communications.

In the field of information and communications using high-frequency signals at the GHz level, the growth of higher speeds has been remarkable. In Japan, the 5th generation mobile communication system (5G) started commercial service in March 2020, and the use of higher frequency bands is being studied for the 6th generation mobile communication system (6G), the next generation after 5G.

In order to support such high capacity and high speed, materials with low relative permittivity and low dielectric loss tangent are required for the parts of communication and radar devices used.

The present applicant has proposed in PTL 1 that a resin composition containing a thermoplastic resin and alumina (B) provides a millimeter wave radar cover with low relative permittivity and dielectric loss tangent, as well as excellent millimeter wave transmittance. However, alumina is a material with a high absolute value of a dielectric constant, and Example 2 of PTL 1, which contains a polycarbonate resin, shows that alumina has a relative permittivity of 3.7 and a dielectric loss tangent of 0.0093.

To reduce the transmission loss of the electromagnetic wave, a material with low relative permittivity and low dielectric loss tangent is required because the magnitude of dielectric loss generated in a material is proportional to the product of the square root of the relative permittivity of the material and the dielectric tangent thereof. However, it is hard to say that the relative dielectric constant and dielectric loss tangent as shown above are hardly considered sufficient for materials that support large capacitance and high speed.

Furthermore, the present applicant has found in PTL 2 that a polycarbonate resin having a specific bisphenol unit has a low dielectric loss tangent and has proposed a millimeter wave radar cover made of a polycarbonate resin material with reduced relative permittivity and dielectric loss tangent by blending the above polycarbonate resin having a specific bisphenol unit with a general-purpose polycarbonate resin. This polycarbonate resin material is an effective material, but the use thereof is limited because of its high price.

As a resin with good dielectric characteristics, blending polystyrene is assumed. However, polystyrene has disadvantages of poor compatibility with a general-purpose polycarbonate resin, poor heat resistance, and poor impact resistance.

In addition, substrate, covers, and the like for antennas are required to have high rigidity and excellent impact resistance enough for sufficiently maintaining the rigidity and also fully withstanding wind pressure in outdoor installations, and furthermore, it is also required to have excellent heat resistance in order not to impair the functions even under high temperatures.

[Citation List]

[Patent Literature]

[PTL 1] JP 2013-102512 A
[PTL 2] JP 2019-195137 A

[Summary of Invention]

[Technical Problem]

The present invention has been made in view of the above circumstances, and an object (problem) thereof is to provide a polycarbonate resin composition with low relative permittivity and low dielectric loss tangent, and excellent heat resistance, rigidity, and impact resistance at low cost.

When a polystyrenic resin is blended into a general-purpose polycarbonate resin, the dielectric loss tangent is low, but the impact resistance greatly decreases. When an elastomer is added, the impact resistance increases. However, there is a problem that excessive addition of an elastomer reduces strength, stiffness, and heat resistance.

[Solution to Problem]

The present inventor has made intensive studies in order to solve the above problems, and, as a result, has found that the impact resistance dramatically increases and the above problems can be solved by including an elastomer and, further, a polycarbonate resin of a specific structure in a system containing a general-purpose polycarbonate resin and a polystyrenic resin, and has finally completed the present invention.

The present invention relates to a polycarbonate resin composition, a molded article, and an antenna member described below.

1 A polycarbonate resin composition comprising, relative to 100 parts by mass of a polycarbonate resin (A), 30 to 150 parts by mass of a polystyrenic resin (B) and 3 to 60 parts by mass of an elastomer (C), the polycarbonate resin (A) comprising a bisphenol A polycarbonate (A1) and a polycarbonate (A2) with a structural unit represented by formula (1) below at a mass ratio (A2/A1) in content of 5/95 to 80/20.

[C1]

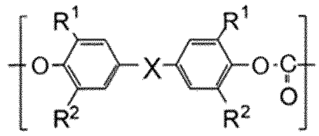

(1)

[in the formula (1), $R^1$ represents a methyl group, $R^2$ represents a hydrogen atom or a methyl group, and X is any one of formulas below:

[C2]

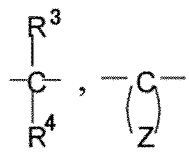

where each of $R^3$ and $R^4$ independently represents a hydrogen atom or a methyl group, and Z is a group bonded to C to form a C6-12 alicyclic hydrocarbon that may have a substituent].

2. The polycarbonate resin composition of 1 above, wherein the elastomer (C) is one or two or more selected from a butadiene/methyl (meth)acrylate copolymer, a butadiene/methyl (meth)acrylate/styrene copolymer, and a styrene/ethylene/butylene/styrene copolymer.

3. The polycarbonate resin composition of 1 or 2 above, wherein a dielectric loss tangent at a frequency of 5.8 GHz is 0.0040 or less.

4. The polycarbonate resin composition of any one of 1 to 3 above, wherein a ratio [(B)/(C)] in content of the polystyrenic resin (B) and the elastomer (C) is 9 or less.

5. The polycarbonate resin composition of any one of 1 to 4 above, wherein an acrylonitrile-butadiene-styrene copolymer is not contained, or if contained, a content of the acrylonitrile-butadiene-styrene copolymer is 10 parts by mass or less, relative to 100 parts by mass of the polycarbonate resin (A).

6. A molded article, comprising the polycarbonate resin composition of any one of 1 to 5 above.

7. The molded article of 6 above, which is an antenna member.

[Advantageous Effects of Invention]

The polycarbonate resin composition of the present invention is available at low-cost and has extremely high impact resistance due to improved adhesion of the polycarbonate (A2) of formula (1) above with the polystyrenic resin (B), and also has excellent rigidity, heat resistance, and hardness, low relative permittivity and low dielectric loss tangent, and small transmission attenuation of electromagnetic waves. Therefore, the polycarbonate resin compositions of the present invention can be suitably used as parts for electronic or electrical devices that can be used in high-frequency bands such as 5G and 6G, especially as antenna members, such as antenna substrates or antenna covers, and among them, as antenna members using electromagnetic waves with a frequency of 1 GHz or higher, and the reliability of electromagnetic waves can be sufficiently ensured.

[Description of Embodiments]

The present invention will be described below in detail while showing embodiments, examples, and the like.

In the present description, the expression "to" is used to mean that a numerical range includes the numerical values listed before and after the word "to" as the lower and upper limits unless otherwise noted.

The polycarbonate resin composition of the present invention comprises, relative to 100 parts by mass of a polycarbonate resin (A), 30 to 150 parts by mass of a polystyrenic resin (B) and 3 to 60 parts by mass of an elastomer (C), the polycarbonate resin (A) comprising a bisphenol A polycarbonate (A1) and a polycarbonate (A2) with a structural unit represented by the formula (1) above at a mass ratio (A2/A1) in content of 5/95 to 80/20.

The following is a detailed description of each component or the like that constitutes the polycarbonate resin composition used in the polycarbonate resin composition of the present invention.

[Polycarbonate Resin (A)]

The polycarbonate resin (A) used in the present invention is a polycarbonate resin comprising a bisphenol A polycarbonate (A1) and a polycarbonate (A2) with a structural unit represented by the formula (1) below at a mass ratio (A2/A1) in content of 5/95 to 80/20.

[C3]

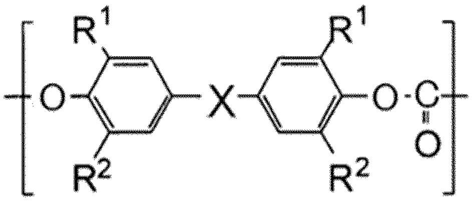

(1)

(In the formula (1), $R^1$ represents a methyl group, $R^2$ represents a hydrogen atom or a methyl group, and X is any one of formulas below:

[C4]

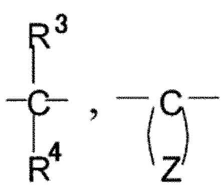

where each of $R^3$ and $R^4$ independently represents a hydrogen atom or a methyl group, and Z is a group bonded to C to form a C6-12 alicyclic hydrocarbon that may have a substituent.)

The polycarbonate resin (A) may be either a polycarbonate copolymer or a polycarbonate blend composed of a bisphenol A polycarbonate (A1) and a polycarbonate (A2) with a structural unit represented by the formula (1) above at a mass ratio (A2/A1) in content of 5/95 to 80/20.

The mass ratio may be achieved by a polycarbonate resin (A) being a polycarbonate copolymer of (A1) and (A2)

or a blended mixture (polycarbonate blend) of a polycarbonate resin containing the polycarbonate (A1) as the main constituent unit and a polycarbonate resin containing the constitution unit (A2) as the main constituent unit.

Here, the term "main constitution unit" means that the proportion of (A1) or (A2) in 100% by mass of carbonate constitution units of each polycarbonate is over 50% by mass, preferably 80% by mass or more, more preferably 90% by mass or more, further preferably 95% by mass or more, and most preferably 97% by mass or more.

Examples of alicyclic hydrocarbons formed by Z bonding to C in the formula (1) of the polycarbonate (A2) may include cycloalkylidene groups such as a cyclohexylidene group, a cycloheptylidene group, a cyclododecylidene group, an adamantylidene group, and a cyclododecylidene group. Examples of alicyclic hydrocarbons having a substituent formed by Z bonding to C may include methyl substitution and ethyl substitution of the alicyclic hydrocarbon groups described above. Among these, a cyclohexylidene group, a methyl substitution of a cyclohexylidene group (preferably 3,3,5-trimethyl substitution), and a cyclododecylidene group are preferred.

In addition, when X in the formula (1) is represented by

[C5]

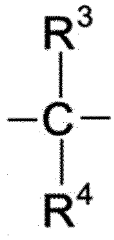

,

it is preferred that at least one of $R^3$ and $R^4$ is a methyl group, and it is more preferred that both are methyl groups.

Preferable examples of the polycarbonate (A2) may include the following i) to iv):

i) polycarbonates having a 2,2-bis(3-methyl-4-hydroxyphenyl)propane unit;
ii) polycarbonates having a 1,1-bis(3-methyl-4-hydroxyphenyl)cyclododecane unit;
iii) polycarbonates having a 2,2-bis(3,5-dimethyl-4-hydroxyphenyl)propane unit; and
iv) polycarbonates having a 1,1-bis(3-methyl-4-hydroxyphenyl)cyclohexane unit.

The polycarbonate resin of the constitution unit mentioned above may be produced using 2,2-bis(3-methyl-4-hydroxyphenyl)propane, 2,2-bis(3-methyl-4-hydroxyphenyl)cyclododecane, 2,2-bis(3,5-dimethyl-4-hydroxyphenyl)propane, 1,1-bis(3-methyl-4-hydroxyphenyl)cyclohexane, and 3,3-dimethylbiphenol, respectively, as dihydroxy compounds.

The molecular weight of the polycarbonate resin (A) may be any one and may be selected and determined as appropriate.

In both cases where the polycarbonate resin (A) is a polycarbonate copolymer of (A1) and (A2) or a blend of (A1) and (A2), the viscosity average molecular weight Mv of the polycarbonate copolymer and each polycarbonate resin is normally 10000 or more, preferably 14000 or more, and more preferably 16000 or more, and normally 40000 or less and preferably 30000 or less. By setting the viscosity average molecular weight to be equal to or larger than the lower limit of the range mentioned above, the mechanical strength of the resin composition can be further increased. In contrast, by setting the viscosity average molecular weight equal to or smaller than the upper limit of the range mentioned above, the fluidity dropping of the resin composition can be suppressed and improved, and the molding processability can be enhanced to facilitate the molding process.

Two or more types of polycarbonate resins with different viscosity average molecular weights may be used as a mixture. In this case, a polycarbonate resin with a viscosity average molecular weight outside the suitable range mentioned above may be mixed.

It is also preferred that the polycarbonate resin includes a high-molecular-weight polycarbonate resin, for example, a polycarbonate resin with a preferable viscosity average molecular weight Mv of 50000 to 95000. The viscosity average molecular weight of the high-molecular-weight polycarbonate resin is more preferably 55000 or more, further preferably 60000 or more, especially 61000 or more, and particularly preferably 62000 or more, and more preferably 90000 or less, further preferably 85000 or less, especially 80000 or less, notably 75000 or less, and particularly 70000 or less.

When containing a high-molecular-weight polycarbonate resin, the polycarbonate resin composition contains preferably 5% by mass or more, more preferably 10% by mass or more, and even more preferably 15% by mass or more of the high-molecular-weight polycarbonate resin. The upper limit of the content is preferably 40% by mass or less and more

preferably 30% by mass or less.

In the present invention, the viscosity average molecular weight Mv of the polycarbonate resin means a value calculated from Schnell's viscosity formula, i.e.,

$\eta = 1.23 \times 10^{-4} Mv^{0.83}$, where [η] (unit: dl/g) is a limiting viscosity determined in methylene chloride as a solvent using an Ubbelohde viscometer at a temperature of 25°C.

A limiting viscosity [η] is a value calculated from the formula below, where [$\eta_{sp}$] is a specific viscosity measured at each solution concentration [C] (g/dl).

[Math. 1]

$$\eta = \lim_{c \to 0} \eta_{sp} / \mathrm{C}$$

The terminal hydroxy group concentration of the polycarbonate resin may be any one and may be selected and determined as appropriate, and is normally 2000 ppm or less, preferably 1500 ppm or less, and more preferably 1000 ppm or less. This can further improve the residence heat stability and tone of the resin composition of the present invention. Furthermore, the lower limit thereof, particularly the lower limit of the terminal hydroxy group concentration of the polycarbonate resin produced by a melt-transesterification method, is normally 10 ppm or more, preferably 30 ppm or more, and more preferably 40 ppm or more. This can suppress a decrease in molecular weight and further enhance the mechanical properties of the resin composition of the present invention.

The unit of the terminal hydroxy group concentration is expressed as ppm of the mass of the terminal hydroxy groups relative to the mass of the polycarbonate resin. The terminal hydroxy group concentration is measured by colorimetric determination using a titanium tetrachloride/acetic acid method (Macromol. Chem. 88 215 (1965)).

In order to improve the appearance and flowability of molded products, the polycarbonate resin may contain a polycarbonate oligomer. The viscosity average molecular weight Mv of this polycarbonate oligomer is normally 1500 or more and preferably 2000 or more, and normally 9500 or less and preferably 9000 or less. Furthermore, the polycarbonate oligomer included is preferably made to be 30% by mass or less of the polycarbonate resin (including polycarbonate oligomers).

The polycarbonate resin may be not only a virgin resin but also a polycarbonate resin recycled from a used product (so-called a material-recycled polycarbonate resin), or a polycarbonate resin produced from a polycarbonate resin that has been chemically decomposed back to raw materials (so-called chemically recycled polycarbonate resin). Alternatively, the polycarbonate resin may contain both a virgin resin and a recycled resin or may be composed of a recycled polycarbonate resin. When containing a recycled polycarbonate resin, the polycarbonate resin composition contains the recycled polycarbonate resin at a proportion of preferably 40% or more, 50% or more, 60% or more, or 80% or more, and it is also preferred that 100% of the polycarbonate resin is a recycled polycarbonate resin.

[Polystyrenic Resin (B)]

The polycarbonate resin composition of the present invention contains 30 to 150 parts by mass of the polystyrenic resin (B) relative to 100 parts by mass of the polycarbonate resin (A).

The polystyrenic resin is preferably a homopolymer of styrene, or may be a copolymer containing less than 50% by mass of other aromatic vinyl monomers, such as α-methylstyrene, p-methylstyrene, vinyltoluene, and vinylxylene.

Alternatively, a polystyrenic resin may be a rubber-reinforced polystyrene resin. The rubber-reinforced polystyrene resin is preferably a copolymer or a blend of butadienic rubbers, and the amount of the butadienic rubber components is normally 1% by mass or more and less than 50% by mass, preferably 3 to 40% by mass, more preferably 5 to 30% by mass, and further preferably 5 to 20% by mass. High-impact polystyrene (HIPS) is particularly preferred as the rubber-reinforced polystyrenic resin.

The polystyrenic resin (B) content is 30 to 150 parts by mass, relative to 100 parts by mass of the polycarbonate resin (A), and is preferably 40 parts by mass or more, more preferably 50 parts by mass or more, especially 60 parts by mass or more, and particularly preferably 70 parts by mass or more and preferably 130 parts by mass or less, more preferably 120 parts by mass or less, especially 110 parts by mass or less, and particularly preferably 100 parts by mass or less.

However, because a copolymer containing acrylonitrile, such as an acrylonitrile-butadiene-styrene copolymer (an ABS resin), tends to increase dielectric loss tangent, it is preferred not to contain such a copolymer. Even if a copolymer containing acrylonitrile is included, the amount thereof is preferably 10 parts by mass or less, more preferably 7 parts by mass or less, especially 5 parts by mass or less, 3 parts by mass or less, 2 parts by mass or less, or 1 part by mass or less,

relative to 100 parts by mass of the polycarbonate resin (A) .

[Elastomer (C)]

As the elastomer, a copolymer of a rubber component graft-polymerized with a monomer copolymerizable with the rubber component is preferable. Such a graft copolymer may be produced by any production method, such as bulk polymerization, solution polymerization, suspension polymerization, or emulsion polymerization, and the type of copolymerization may be a single-stage graft or a multi-stage graft.

The rubber component normally has a glass transition temperature of 0°C or less, and those with a glass transition temperature of -20°C or less are especially preferred, and those with a glass transition temperature of -30°C or less are even more preferred. Specific examples of rubber components may include polybutadienic rubbers; polyisoprene rubbers or hydrogenated materials thereof; butadiene-acrylic composite rubbers; styrene-butadiene rubbers; ethylene-α-olefinic rubbers, such as ethylene-propylene rubbers, ethylene-butene rubbers, and ethylene-octene rubbers; ethylene-acrylic rubbers, and the like. These may be used singly, or two or more thereof may be used as a mixture. Among them, a polybutadiene rubber, a polyisoprene rubber or a hydrogenated material thereof, and a styrene-butadiene rubber are preferred.

A polyalkyl acrylate rubber, such as polybutyl acrylate, poly(2-ethylhexyl acrylate), or a butyl acrylate/2-ethylhexyl acrylate copolymer, or a siliconated rubber, such as an organopolysiloxane rubber, is unfavorable because dielectric loss tangent is likely to increase.

Specific examples of monomer components that can be graft-copolymerized with a rubber component may include aromatic vinyl compounds; vinyl cyanide compounds; (meth)acrylic acid ester compounds; (meth)acrylic acid compounds; epoxy group-containing (meth)acrylic acid ester compounds, such as glycidyl (meth)acrylate; maleimide compounds, such as maleimide, N-methylmaleimide, and N-phenylmaleimide; α,β-unsaturated carboxylic acid compounds, such as maleic acid, phthalic acid, and itaconic acid, and anhydrides thereof (for example, maleic anhydride or the like), and the like. These monomer components may be used singly, or two or more thereof may be used together. Among them, aromatic vinyl compounds and (meth)acrylic acid ester compounds are preferred, and styrene, methyl (meth) acrylate, ethyl (meth)acrylate, butyl (meth)acrylate, cyclohexyl (meth)acrylate, octyl (meth)acrylate, and the like may be preferably mentioned.

The elastomer is preferably a core/shell graft copolymer-type elastomer. Among them, a core/shell graft copolymer having a core layer of at least one rubber component selected from a polybutadiene-containing rubber, an ethylene/butylene rubber, and a poly(butyl acrylate)-containing rubber, and a shell layer formed by copolymerizing a (meth)acrylic acid ester around the core layer is preferred, and a core/shell elastomer having a core of a butadienic rubber is particularly preferred. The core/shell graft copolymer preferably contains 40% by mass or more, more preferably 60% by mass or more of rubber components. Furthermore, the core/shell graft copolymer preferably contains 10% by mass or more of (meth)acrylic acid components.

Specific preferable examples of these core/shell graft copolymers may include a butadiene/methyl (meth) acrylate copolymer (MB), a butadiene/methyl (meth)acrylate/styrene copolymer (MBS), a styrene/ethylene/butylene/styrene copolymer (SEBS), and the like, and a butadiene/methyl (meth)acrylate copolymer (MB), a butadiene/methyl (meth)acrylate/styrene copolymer (MBS), and a styrene/ethylene/butylene/styrene copolymer (SEBS) are more preferred.

The elastomer (C) content is 3 to 60 parts by mass, relative to 100 parts by mass of the polycarbonate resin (A). By including such an amount, the impact resistance, rigidity, and heat resistance of the polycarbonate resin composition, as well as the relative permittivity and dielectric loss tangent, can be well balanced and made better. The elastomer (C) content is preferably 5 parts by mass or more, more preferably 7.5 parts by mass or more, especially 10 parts by mass or more, and particularly preferably 15 parts by mass or more, and preferably 50 parts by mass or less, more preferably 40 parts by mass or less, especially 30 parts by mass or less, and particularly preferably 25 parts by mass or less.

Furthermore, the content ratio between the polystyrenic resin (B) and the elastomer (C) of the polycarbonate resin composition (polystyrenic resin (B) content/elastomer (C) content) of 9 or less is preferred because the notched Charpy impact strength value is high.

[Stabilizer]

The polycarbonate resin composition of the present invention preferably contains a stabilizer, and as a stabilizer, a phosphorus stabilizer (heat stabilizer) and a phenolic stabilizer (antioxidant) are preferred.

Any known phosphorus stabilizers may be used as the phosphorus stabilizer. Specific examples may include oxo acids, such as phosphoric acid, phosphonic acid, phosphorous acid, phosphinic acid, and polyphosphoric acid; acidic pyrophosphoric acid metal salts, such as acidic sodium pyrophosphate, acidic potassium pyrophosphate, and acidic calcium pyrophosphate; phosphoric acid salts of a metal of the group 1 or 2B, such as potassium phosphate, sodium

phosphate, cesium phosphate, and zinc phosphate; organic phosphate compounds, organic phosphite compounds, organic phosphonite compounds, and the like, and an organic phosphite compound is particularly preferred.

Examples of organic phosphite compounds may include triphenyl phosphite, tris(monononylphenyl) phosphite, tris(monononyl/dinonyl-phenyl) phosphite, tris(2,4-di-tert-butylphenyl) phosphite, monooctyl diphenyl phosphite, dioctyl monophenyl phosphite, monodecyl diphenyl phosphite, didecyl monophenyl phosphite, tridecyl phosphite, trilauryl phosphite, tristearyl phosphite, 2,2-methylenebis(4,6-di-tert-butylphenyl)octyl phosphite, and the like.

Specific examples of such organic phosphite compounds may include "ADK STAB 1178", "ADK STAB 2112", and "ADK STAB HP-10" manufactured by ADEKA, "JP-351", "JP-360", and "JP-3CP" manufactured by Johoku Chemical Co., Ltd., and "Irgafos 168" manufactured by BASF SE.

One phosphorus stabilizer may be included singly, or two or more may be included in any combination and ratio.

The phosphorus stabilizer content is preferably 0.01 parts by mass or more and more preferably 0.03 parts by mass or more, and normally 1 part by mass or less, preferably 0.7 parts by mass or less, and more preferably 0.5 parts by mass or less, relative to 100 parts by mass of the polycarbonate resin (A). If the phosphorus stabilizer content is less than the lower limit of the range mentioned above, the heat stability effect may be insufficient. In contrast, if the phosphorus stabilizer content is over the upper limit of the range mentioned above, the effect may be saturated, and it may no longer be economical.

Examples of phenolic stabilizers may include a hindered phenolic antioxidant. Specific examples thereof may include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-(hexane-1,6-diyl)bis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-[4,6-bis(octylthio)-1,3,5-triazin-2-ylamino]phenol, 2-[1-(2-hydroxy-3,5-di-tert-pentylphenyl)ethyl]-4,6-di-tert-pentylphenyl acrylate, and the like.

Among them, pentaerythritol tetrakis[3-(3,5-di-tert-butyl-4-hydroxyphenyl)propionate] and octadecyl-3-(3,5-di-tert-butyl-4-hydroxyphenyl)propionate are preferred. Specific examples of such phenolic antioxidants may include "Irganox 1010" and "Irganox 1076" manufactured by BASF, "ADEK STAB AO-50" and "ADEK STAB AO-60" manufactured by ADEKA, and the like.

One phenol stabilizer may be included, or two or more may be included in any combination and ratio.

The phenolic stabilizer content is preferably 0.01 parts by mass or more, and normally 1 part by mass or less and preferably 0.5 parts by mass or less, relative to 100 parts by mass of the polycarbonate resin (A). By setting the phenolic stabilizer content to be equal to or larger than the lower limit of the range mentioned above, the effect as a phenolic stabilizer can be fully obtained. Furthermore, by making the content of the phenolic stabilizer equal to or smaller than the upper limit of the range mentioned above, the effect may not be saturated, and it is economical.

[Mold-release agent]

The polycarbonate resin composition of the present invention preferably contains a mold-release agent. Examples of mold-release agents may include aliphatic carboxylic acids, esters of aliphatic carboxylic acids and alcohols, aliphatic hydrocarbon compounds with a number-average molecular weight of 200 to 15000, polysiloxane silicone oils, and the like.

Examples of aliphatic carboxylic acids include saturated or unsaturated aliphatic monohydric, dihydric, or trihydric carboxylic acid. Aliphatic carboxylic acids herein encompass alicyclic carboxylic acids. Among these, preferable aliphatic carboxylic acids are C6-36 monohydric or dihydric carboxylic acids, and C6-36 aliphatic saturated monohydric carboxylic acids are further preferred. Specific examples of such aliphatic carboxylic acids may include palmitic acid, stearic acid, caproic acid, capric acid, lauric acid, arachic acid, behenic acid, lignoceric acid, cerotic acid, melissic acid, tetratriacontanoic acid, montanic acid, adipic acid, azelaic acid, and the like.

For example, as the aliphatic carboxylic acid in an ester of an aliphatic carboxylic acid and an alcohol, the same one as the aliphatic carboxylic acid mentioned above may be used. Meanwhile, examples of alcohols may include saturated or unsaturated monohydric or polyhydric alcohols. These alcohols may have a substituent, such as a fluorine atom, an aryl group, or the like. Among them, monohydric or polyhydric saturated alcohol with a carbon number of 30 or less is preferred, and an aliphatic saturated monohydric alcohol or aliphatic saturated polyhydric alcohol with a carbon number of 30 or less is further preferred. The term "aliphatic" is herein used as a term encompassing alicyclic compounds.

Specific examples of such alcohols may include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, dipentaerythritol, and the like.

The ester mentioned above may contain an aliphatic carboxylic acid and/or an alcohol as impurities. Furthermore, the ester mentioned above may be a pure substance and also may be a mixture of a plurality of compounds. Furthermore, as the aliphatic carboxylic acid and alcohol bonded to constitute one ester, one aliphatic carboxylic acid and one alcohol may be used, or two or more of each may be used in any combination and ratio.

Specific examples of esters of aliphatic carboxylic acids and alcohols may include beeswax (a mixture mainly containing myricyl palmitate), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate, and the like.

Examples of aliphatic hydrocarbons with a number-average molecular weight of 200 to 15000 may include liquid paraffin, paraffin wax, microcrystalline wax, polyethylene wax, Fischer-Tropsch wax, C3-12 $\alpha$-olefin oligomers, and the like. The term "aliphatic hydrocarbon" herein encompasses alicyclic hydrocarbons. Furthermore, these hydrocarbons may be partially oxidized.

Among them, paraffin wax, polyethylene wax, or partial oxide of polyethylene wax is preferred, and paraffin wax or polyethylene wax is further preferred.

Furthermore, the number-average molecular weight of the aliphatic hydrocarbon is preferably 5000 or less.

The aliphatic hydrocarbons may be a single substance, and mixtures of aliphatic hydrocarbons having various constitutional components and molecular weights may also be used as long as the main component is within the above range.

Examples of polysiloxane silicone oil may include dimethylsilicone oil, methylphenylsilicone oil, diphenylsilicone oil, fluorinated alkylsilicones, and the like.

As the mold-release agent described above, one mold-release agent may be included, or two or more mold-release agents may be included in any combination and ratio.

The content of the mold-release agent is normally 0.001 parts by mass or more and preferably 0.01 parts by mass or more, and normally 2 parts by mass or less and preferably 1 part by mass or less, relative to 100 parts by mass of the polycarbonate resin (A). If the mold-release agent content is less than the lower limit of the range mentioned above, the effect of the mold-release agent may not be sufficient. In contrast, if the mold-release agent content is over the upper limit of the range mentioned above, the hydrolysis resistance may be decreased, and mold contamination during injection molding may occur.

[Additive, etc.]

The polycarbonate resin composition may contain other additives than those described above, for example, additives such as UV ray absorbers, fillers, reinforcing materials (carbon fibers and glass fibers), pigments, dyes, flame retardants, antistatic agents, plasticizers, and compatibilizing agents, or other resins than the polycarbonate resin (A) and polystyrenic resin (B). One or two or more of these additives or other resins may be blended.

The content when the polycarbonate resin composition contains other resins than the polycarbonate resin (A) and the polystyrenic resin (B) is preferably 40 parts by mass or less, more preferably 30 parts by mass or less, further preferably 20 parts by mass or less or 10 parts by mass or less, and particularly preferably 5 parts by mass or less, relative to 100 parts by mass of the polycarbonate resin (A).

[Production method of polycarbonate resin composition]

The method for producing a polycarbonate resin composition is not limited, and known production methods of polycarbonate resin compositions may be widely adopted. Examples of the production methods may include a method including mixing essential components and other components blended as needed in advance using various mixers, such as a tumbler or a Henschel mixer, and then melt-kneading them by a mixer such as a Banbury mixer, a roll, a Brabender, a single screw kneading extruder, a twin screw kneading extruder, or a kneader. The temperature of melt kneading is not particularly limited and is normally within the range of 240°C to 320°C.

Pellets obtained by pelletizing the polycarbonate resin composition mentioned above can be molded by various molding methods to produce a molded article. Alternatively, a molded article may be directly molded from a resin melt-kneaded by an extruder without going through pellets.

Any molding method normally adopted for molding a polycarbonate resin composition may be used as the method for producing a molded body. Examples thereof may include an injection molding method, a super-high speed injection molding method, an injection compression molding method, a two-color molding method, a hollow molding method such as gas assisted injection molding method, a molding method using a heat-insulating mold, a molding method using a rapid heating mold, foaming molding (including supercritical fluid), insert molding, an IMC (in-mold coating) molding method, an extrusion molding method, a sheet molding method, a hot molding method, a rotation molding method, a laminate molding method, a press molding method, a blow molding method, and the like. In addition, a molding method using a hot runner system may also be used.

Among them, injection molding methods, such as an injection molding method, a super-high-speed injection molding method, and an injection compression molding method, are preferred.

A hard coat layer may further be formed on the surface of the molded article. Known materials may be used, as appropriate, as hard coat agents for forming a hard coat layer, and, for example, various hard coat agents, such as siliconated, acrylic, silazane, and urethane hard coat agents may be used. In order to increase the adhesion or weatherability, the hard coat layer may be a two-coat-type hard coat agent for forming a primer layer before coating the hard coat agent. The method for coating a hard coat agent is not particularly limited, and the hard coat agent may be coated by any coating method, such as spray coating, dip coating, flow coating, spin coating, bar coating, curtain coating, die coating, gravure coating, roll coating, blade coating, and air knife coating.

The thickness of the hard coat is preferably 1 to 50 μm and more preferably 5 to 30 μm.

The polycarbonate resin composition of the present invention has a small dielectric loss tangent, and the dielectric loss tangent at the frequency of 5.8 GHz is preferably 0.0040 or less, more preferably 0.0036 or less, further preferably 0.0034 or less, and particularly preferably 0.0032 or less.

The relative permittivity of the polycarbonate resin composition of the present invention is also small, and the relative permittivity is preferably 2.8 or less, more preferably 2.7 or less, and further preferably 2.6 or less.

The details of the specific measurement method of the dielectric loss tangent and the relative permittivity are as described in the Examples.

The polycarbonate resin composition of the present invention is excellent in heat resistance and has a deflection temperature under load, which is an index of the heat resistance, of preferably over 88°C and more preferably 90°C or higher. The deflection temperature under load is measured in accordance with ISO 75-2, and the details of the specific measurement method thereof are disclosed in Examples.

Furthermore, the polycarbonate resin composition of the present invention is excellent in impact resistance, and the Charpy impact strength is preferably NB (non-break) without a notch and 20 $kJ/m^2$ or more with a notch. The Charpy impact strength is measured in accordance with ISO 179-1,2, and the details of the specific measurement method thereof are as disclosed in Examples.

Furthermore, the polycarbonate resin composition of the present invention is excellent in rigidity, the flexural modulus is preferably 2000 MPa or more, and the bending strength is 67 Pa or more. The flexural modulus and the bending strength are measured in accordance with ISO 178, and the details of the specific measurement method thereof are disclosed in Examples.

The polycarbonate resin composition of the present invention is preferably used in electronic or electric device parts, particularly using electromagnetic waves with a frequency of 1 GHz or higher. Electronic or electric device parts formed from the polycarbonate resin composition of the present invention are particularly available in the band within a wide range of a frequency of 1 GHz or higher. The electronic or electric device parts are also adaptable to the frequency band up to 52.6 GHz of the 5G wireless communication standard "NR", or up to about 90 GHz, which is being considered for use in future 5G evolution, or sub terahertz waves such as 90G to 300 GHz for 6G. It is of course suitable for existing low-frequency bands, or bands such as 10 to 20 GHz of 6G low bands/mid-bands.

Examples of electronic or electric device parts for which the molded article of the polycarbonate resin composition of the present invention is available may include base parts such as housings of electronic or electric devices, circuit boards, semiconductor inter-layer dielectrics, antenna parts (substrates, antenna covers, and radar covers), insulating material resistors of high-frequency coaxial cables, switches, capacitors, and photosensors; IC sockets and connectors; and parts for transport equipment such as automobiles, bicycles, motorcycles, trucks, railcars, helicopters, and aircraft; construction machines such as bulldozers, hydraulic excavators, and cranes; vessels such as merchant vessels, special purpose vessels, fishing vessels, and naval vessels; agricultural machines such as tractors and harvesters; smartphones, tablets, wearable devices, computers, television receivers, VR goggles, cameras, speakers, drones, robots, sensors, medical apparatuses, analysis apparatuses, and the like. In particular, it is particularly suitable as a substrate for antennas, an antenna cover, or a radar cover.

Antenna covers and radar covers are members such as housing, antenna cover (radome), and the like for storing or protecting antenna modules that send or receive electromagnetic waves, and further include members disposed on the route of the electromagnetic waves that are sent from or received by a radar module.

[Examples]

The present invention will be further specifically described with reference to Examples. However, the present invention should not be construed as limited to the following examples.

The raw materials used in Examples and Comparative Example below are listed in Table 1.

[Table 1]

| | | |
|---|---|---|
| PC resin | A1-1 | 2,2-bis-(4-hydroxyphenyl)propane aromatic polycarbonate resin lupilon E-2000 by Mitsubishi Engineering-Plastics Corp.<br>Mv = 27,000, Pencil hardness = 2B |
| | A1-2 | 2,2-bis-(4-hydroxyphenyl)propane aromatic polycarbonate resin lupilon S-3000 by Mitsubishi Engineering-Plastics Corp.<br>Mv = 21,000, Pencil hardness = 2B |
| | A1-3 | 2,2-bis-(4-hydroxyphenyl)propane aromatic polycarbonate resin lupilon H-4000 by Mitsubishi Engineering-Plastics Corp.<br>Mv = 16,000, Pencil hardness = 2B |
| | A1-4 | 2,2-bis-(4-hydroxyphenyl)propane aromatic recycled polycarbonate resin PC2010 ANC by SHANGHAI AUSELL MATERIAL<br>Mv = 22,000, Pencil hardness = 2B |
| | A2-1 | 2,2-bis-(3-methyl-4-hydroxyphenyl)propane aromatic polycarbonate resin<br>Mv = 26,000, Pencil hardness = 2H |
| | A2-2 | 2,2-bis-(3-methyl-4-hydroxyphenyl)propane aromatic polycarbonate resin<br>Mv = 20,000, Pencil hardness = 2H |
| Styrenic resin | B1 | Polystyrene resin<br>HH105 by PS Japan Corp. Mw = $31\times10^4$ |
| | B2 | Polystyrene resin<br>HH102 by PS Japan Corp. Mw = $25\times10^4$ |
| | B3 | High-impact polystyrene resin<br>HT478 by PS Japan Corp. Mw = $23\times10^4$<br>Rubber component (polybutadiene) content = 8.8 mass% |
| Elastomer | C1 | Core/shell elastomer with butadiene rubber core /shell of mainly composed of methyl methacrylate<br>Kane Ace M711 by Kaneka Corp. |
| | C2 | Core/shell elastomer with butadiene rubber core /shell of mainly composed of methyl methacrylate<br>METABLEN E-875A by Mitsubishi Chemical Corp. |
| | C3 | Core/shell elastomer with butadiene rubber core /shell mainly composed of methyl methacrylate/styrene<br>Kane Ace M732 by Kaneka Corp. |
| | C4 | Styrene-ethylene/butylene-styrene copolymer (SEBS)<br>TAIPOL SEBS-6152 by TSRC |
| Stabilizer | D1 | Hindered phenolic stabilizer<br>Octadecyl-3-(3,5-di-tert-butyl-4-hydroxyphenyl)propionate Irganox 1076 by TSRC |
| | D2 | Phosphorus Stabilizer<br>Tris(2,4-di-tert-butylphenyl)phosphite<br>ADK STAB 2112 by ADEKA Corp. |
| Mold-release agent | E1 | Pentaerythritol tetrastearate<br>LXIOL VPG861 by Cognis Japan Co. |
| | E2 | Stearyl Stearate<br>UNISTER M-9676 by NOF Corp. |

(Examples 1 to 19 and Comparative Examples 1 to 7) [Production of polycarbonate resin composition pellet]

The components listed in Table 1 were blended at the proportions (parts by mass) listed in Tables 2 to 4 below, then mixed in a tumbler for 20 minutes, melt-mixed at a cylinder temperature of 260°C using a twin screw extruder (TEM 26SX manufactured by Toshiba Machine Co., Ltd.), and then pellets of a polycarbonate resin composition were obtained by strand cutting.

<Relative permittivity and dielectric loss tangent>

The pellets obtained by the method described above were dried at 100°C for 5 hours, and a 100 mm × 150 mm molded article with a thickness of about 2 mm was obtained using an injection molding machine (ROBOSHOT S-2000i 150B manufactured by FANUC Corp.). A 100 mm × 1 mm × 2 mm flat test piece was cut from a flat test piece obtained by the above method, and then the relative permittivity and dielectric loss tangent of the cut flat test piece at a frequency of 5.8 GHz were measured by a perturbation method using a network analyzer manufactured by Keysight Technologies and a cavity resonator manufactured by Kanto Electronics Application & Development, Inc.

<Flexural modulus and bending strength>

The pellet obtained in the method described above was dried at 100°C for 5 hours and injection-molded under a condition wherein the cylinder temperature of 260°C, a mold temperature of 80°C, and a molding cycle of 50 seconds using NEX 80III injection molding machine manufactured by Nissei Plastic Industrial Co., Ltd., to mold an ISO multi-purpose test piece (4 mm thickness). The resulting test piece was subjected to a bending test under room temperature (23°C) conditions in accordance with the ISO-178 standard, and the flexural modulus (unit: MPa) and bending strength (unit: MPa) were measured.

<Charpy impact strength>

The pellet obtained in the method described above was dried at 100°C for 5 hours and injection-molded under a condition wherein the cylinder temperature of 260°C, a mold temperature of 80°C, and a molding cycle of 50 seconds using NEX 80III injection molding machine manufactured by Nissei Plastic Industrial Co., Ltd., to mold an impact resistance test piece with a thickness of 3 mm based on ISO 179-1,2. Using the resulting test piece, unnotched and notched Charpy impact strength (unit: kJ/$m^2$) were measured under a temperature environment at 23°C.

<Deflection temperature under load>

The pellet obtained in the method described above was dried at 100°C for 5 hours and injection-molded under a condition wherein the cylinder temperature of 260°C, a mold temperature of 80°C, and a molding cycle of 50 seconds using NEX 80III injection molding machine manufactured by Nissei Plastic Industrial Co., Ltd., to mold an ISO multi-purpose test piece (4 mm thickness). Using the resulting test piece, the deflection temperature under load (unit: °C) was measured under high load (1.80 MPa) conditions in accordance with ISO 75-2 using a 6A-2-type HDT measurement device manufactured by Toyo Seiki Seisaku-Sho, Ltd.).

Tables 2 to 4 show the above evaluation results.

[Table 2]

| | | Example | | | | | | | | |
|---|---|---|---|---|---|---|---|---|---|---|
| | | 1 | 2 | 3 | 4 | 5 | 6 | 7 | 8 | 9 |
| PC resin | A1-1 | | | | | | | | | |
| | A1-2 | 80 | 80 | 80 | 80 | 83 | 75 | 82 | 82 | |
| | A1-3 | | | | | | | | | |
| | A1-4 | | | | | | | | | 80 |
| | A2-1 | 12 | 12 | 12 | 12 | 10 | 15 | 11 | 11 | 12 |
| | A2-2 | 8 | 8 | 8 | 8 | 7 | 10 | 7 | 7 | 8 |

(continued)

| | | Example | | | | | | | | |
|---|---|---|---|---|---|---|---|---|---|---|
| | | 1 | 2 | 3 | 4 | 5 | 6 | 7 | 8 | 9 |
| Styrene resin | B1 | | | | | | | | | |
| | B2 | 81 | 81 | 81 | 81 | 50 | 127 | | 73 | 81 |
| | B3 | | | | | | | 73 | | |
| Elastomer | C1 | 20 | | | | 17 | 25 | 9 | 9 | 20 |
| | C2 | | 20 | | | | | | | |
| | C3 | | | 20 | | | | | | |
| | C4 | | | | 20 | | | | | |
| Stabilizer | D1 | 0.20 | 0.20 | 0.20 | 0.20 | 0.17 | 0.25 | 0.18 | 0.18 | 0.20 |
| | D2 | 0.06 | 0.06 | 0.06 | 0.06 | 0.05 | 0.08 | 0.06 | 0.06 | 0.06 |
| Mold-release agent | E1 | 0.61 | 0.61 | 0.61 | 0.61 | 0.50 | 0.76 | 0.55 | 0.55 | 0.61 |
| | E2 | 0.20 | 0.20 | 0.20 | 0.20 | 0.17 | 0.25 | 0.18 | 0.18 | 0.20 |
| Mass ratio of A2/A1 | | 20/80 | 20/80 | 20/80 | 20/80 | 17/83 | 25/75 | 18/82 | 18/82 | 20/80 |
| Flexural modulus (MPa) | | 2400 | 2400 | 2400 | 2300 | 2300 | 2400 | 2000 | 2600 | 2400 |
| Bending strength (MPa) | | 89 | 86 | 89 | 82 | 85 | 90 | 68 | 100 | 88 |
| Unnotched Charpy impact strength (kJ/m$^2$) | | NB | NB | NB | NB | NB | 193 | NB | NB | NB |
| Notched Charpy impact strength (kJ/m$^2$) | | 55 | 24 | 22 | 20 | 65 | 30 | 35 | 37 | 53 |
| Deflection temperature under load (1.80 MPa, °C) | | 92 | 92 | 93 | 97 | 97 | 89 | 94 | 95 | 91 |
| Relative permittivity (5.8 GHz) | | 2.5 | 2.5 | 2.5 | 2.5 | 2.5 | 2.5 | 2.5 | 2.5 | 2.5 |
| Dielectric loss tangent (5.8 GHz) | | 0.0028 | 0.0029 | 0.0028 | 0.0021 | 0.0033 | 0.0025 | 0.0032 | 0.0027 | 0.0028 |

[Table 3]

| | | Example | | | | | | | | | |
|---|---|---|---|---|---|---|---|---|---|---|---|
| | | 10 | 11 | 12 | 13 | 14 | 15 | 16 | 17 | 18 | 19 |
| PC resin | A1-1 | | | | | 80 | | | 80 | | |
| | A1-2 | 90 | 40 | 80 | 80 | | 30 | 80 | | | |
| | A1-3 | | | | | | 50 | | | | |
| | A1-4 | | | | | | | | | 90 | 40 |
| | A2-1 | 6 | 36 | 20 | | 12 | 12 | 12 | 12 | 6 | 36 |
| | A2-2 | 4 | 24 | | 20 | 8 | 8 | 8 | 8 | 4 | 24 |
| Styrene resin | B1 | | | | | | 81 | 81 | 81 | | |
| | B2 | 81 | 81 | 81 | 81 | 81 | | | | 81 | 81 |
| | B3 | | | | | | | | | | |
| Elastomer | C1 | 20 | 20 | 20 | 20 | 20 | 20 | 20 | 20 | 20 | 20 |
| | C2 | | | | | | | | | | |
| | C3 | | | | | | | | | | |
| | C4 | | | | | | | | | | |
| Stabilizer | D1 | 0.20 | 0.20 | 0.20 | 0.20 | 0.20 | 0.20 | 0.20 | 0.20 | 0.20 | 0.20 |
| | D2 | 0.06 | 0.06 | 0.06 | 0.06 | 0.06 | 0.06 | 0.06 | 0.06 | 0.06 | 0.06 |
| Mold-release agent | E1 | 0.61 | 0.61 | 0.61 | 0.61 | 0.61 | 0.61 | 0.61 | 0.61 | 0.61 | 0.61 |
| | E2 | 0.20 | 0.20 | 0.20 | 0.20 | 0.20 | 0.20 | 0.20 | 0.20 | 0.20 | 0.20 |
| Mass ratio of A2/A1 | | 10/90 | 60/40 | 20/80 | 20/ 80 | 20/80 | 20/80 | 20/80 | 20/80 | 10/90 | 60/40 |
| Flexural modulus (MPa) | | 2300 | 2400 | 2400 | 2400 | 2400 | 2400 | 2400 | 2400 | 2300 | 2400 |
| Bending strength (MPa) | | 87 | 92 | 90 | 90 | 89 | 91 | 92 | 89 | 86 | 91 |
| Unnotched Charpy impact strength ($kJ/m^2$) | | NB | NB | NB | NB | NB | NB | NB | NB | NB | NB |
| Notched Charpy impact strength ($kJ/m^2$) | | 47 | 51 | 63 | 54 | 60 | 23 | 56 | 83 | 45 | 50 |
| Deflection temperature under load (1.80 MPa, °C) | | 93 | 91 | 93 | 93 | 93 | 92 | 92 | 92 | 92 | 90 |
| Relative permittivity (5.8 GHz) | | 2.5 | 2.5 | 2.5 | 2.5 | 2.5 | 2.5 | 2.5 | 2.5 | 2.5 | 2.5 |
| Dielectric loss tangent (5.8 GHz) | | 0.0031 | 0.0021 | 0.0028 | 0.0028 | 0.0029 | 0.0028 | 0.0028 | 0.0028 | 0.0031 | 0.0021 |

[Table 4]

| | | Comparative Example | | | | | | |
|---|---|---|---|---|---|---|---|---|
| | | 1 | 2 | 3 | 4 | 5 | 6 | 7 |
| PC resin | A1-1 | | | | | | | |
| | A1-2 | 100 | 100 | 100 | 100 | 100 | 100 | 100 |
| | A1-3 | | | | | | | |
| | A1-4 | | | | | | | |
| | A2-1 | | | | | | | |
| | A2-2 | | | | | | | |
| Styrene resin | B1 | | | | | | | |
| | B2 | 81 | 81 | 81 | 81 | 50 | 127 | |
| | B3 | | | | | | | 73 |
| Elastomer | C1 | 20 | | | | 17 | 25 | 9 |
| | C2 | | 20 | | | | | |
| | C3 | | | 20 | | | | |
| | C4 | | | | 20 | | | |
| Stabilizer | D1 | 0.20 | 0.20 | 0.20 | 0.20 | 0.17 | 0.25 | 0.18 |
| | D2 | 0.06 | 0.06 | 0.06 | 0.06 | 0.05 | 0.08 | 0.06 |
| Mold-release agent | E1 | 0.61 | 0.61 | 0.61 | 0.61 | 0.50 | 0.76 | 0.55 |
| | E2 | 0.20 | 0.20 | 0.20 | 0.20 | 0.17 | 0.25 | 0.18 |
| Mass ratio of A2/A1 | | 0/100 | 0/100 | 0/100 | 0/100 | 0/100 | 0/100 | 0/100 |
| Flexural modulus (MPa) | | 2300 | 2300 | 2400 | 2300 | 2300 | 2400 | 2000 |
| Bending strength (MPa) | | 84 | 84 | 89 | 82 | 81 | 85 | 67 |
| Unnotched Charpy impact strength (kJ/m$^2$) | | NB | NB | NB | NB | NB | 150 | NB |
| Notched Charpy impact strength (kJ/m$^2$) | | 18 | 15 | 14 | 13 | 24 | 11 | 13 |
| Deflection temperature under load (1.80 MPa, °C) | | 94 | 93 | 94 | 95 | 99 | 90 | 96 |
| Relative permittivity (5.8 GHz) | | 2.5 | 2.5 | 2.5 | 2.5 | 2.5 | 2.5 | 2.5 |
| Dielectric loss tangent (5.8 GHz) | | 0.0033 | 0.0034 | 0.0033 | 0.0027 | 0.0038 | 0.0029 | 0.0037 |

As is clear from the above results, the polycarbonate resin composition of the present invention is excellent in mechanical properties (impact resistance, rigidity, hardness, heat resistance, and the like) and also excellent in electric characteristics (relative permittivity and dielectric loss tangent). In contrast, no results that had achieved both sufficient mechanical and electrical properties could be obtained in Comparative Examples.

[Industrial Applicability]

The polycarbonate resin composition of the present invention shows low relative permittivity and dielectric loss tangent, high impact resistance, and excellent heat resistance, rigidity, and hardness. Thus, the polycarbonate resin composition can be used suitably in a wide range of various electronic or electrical devices that use electromagnetic waves. Furthermore, the molded article composed of the polycarbonate resin composition of the present invention shows low relative permittivity and low dielectric loss tangent, decreased transmission attenuation, excellent heat resistance, impact resistance, and rigidity. Thus, the molded article can be used suitably in a wide range of various antenna members,

particularly antenna members that use electromagnetic waves of a frequency of 1 GHz or higher.

## Claims

**1.** A polycarbonate resin composition comprising, relative to 100 parts by mass of a polycarbonate resin (A), 30 to 150 parts by mass of a polystyrenic resin (B) and 3 to 60 parts by mass of an elastomer (C), the polycarbonate resin (A) comprising a bisphenol A polycarbonate (A1) and a polycarbonate (A2) with a structural unit represented by formula (1) below at a mass ratio (A2/A1) in content of 5/95 to 80/20.

[C1]

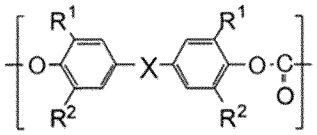

(1)

[in the formula (1), $R^1$ represents a methyl group, $R^2$ represents a hydrogen atom or a methyl group, and X is any one of formulas below:

[C2]

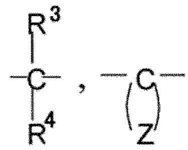

where each of $R^3$ and $R^4$ independently represents a hydrogen atom or a methyl group, and Z is a group bonded to C to form a C6-12 alicyclic hydrocarbon that may have a substituent].

**2.** The polycarbonate resin composition of claim 1, wherein the elastomer (C) is one or two or more selected from a butadiene/methyl (meth)acrylate copolymer, a butadiene/methyl (meth)acrylate/styrene copolymer, and a styrene/ethylene/butylene/styrene copolymer.

**3.** The polycarbonate resin composition of claim 1 or 2, wherein a dielectric loss tangent at a frequency of 5.8 GHz is 0.0040 or less.

**4.** The polycarbonate resin composition of any one of claims 1 to 3, wherein a ratio [(B)/(C)] in content of the polystyrenic resin (B) and the elastomer (C) is 9 or less.

**5.** The polycarbonate resin composition of any one of claims 1 to 4, wherein an acrylonitrile-butadiene-styrene copolymer is not contained, or if contained, a content of the acrylonitrile-butadiene-styrene copolymer is 10 parts by mass or less, relative to 100 parts by mass of the polycarbonate resin (A).

**6.** A molded article, comprising the polycarbonate resin composition of any one of claims 1 to 5.

**7.** The molded article of claim 6, which is an antenna member.

## INTERNATIONAL SEARCH REPORT

International application No. **PCT/JP2023/008041**

**A. CLASSIFICATION OF SUBJECT MATTER**

***C08L 69/00***(2006.01)i; ***C08L 9/00***(2006.01)i; ***C08L 21/00***(2006.01)i; ***C08L 25/04***(2006.01)i; ***C08L 53/00***(2006.01)i
FI: C08L69/00; C08L25/04; C08L21/00; C08L9/00; C08L53/00

According to International Patent Classification (IPC) or to both national classification and IPC

**B. FIELDS SEARCHED**

Minimum documentation searched (classification system followed by classification symbols)

C08L69/00; C08L9/00; C08L21/00; C08L25/04; C08L53/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-179331 A (MITSUBISHI ENGINEERING PLASTICS CORP.) 05 October 2017 (2017-10-05) claims, examples | 1-7 |
| Y | | 1-7 |
| X | JP 2017-218567 A (MITSUBISHI ENGINEERING PLASTICS CORP.) 14 December 2017 (2017-12-14) claims, examples | 1-7 |
| Y | | 1-7 |
| Y | JP 2020-138451 A (MITSUBISHI ENGINEERING PLASTICS CORP.) 03 September 2020 (2020-09-03) claims, paragraph [0009], examples | 1-6 |
| A | | 7 |
| Y | JP 2019-195137 A (MITSUBISHI ENGINEERING PLASTICS CORP.) 07 November 2019 (2019-11-07) claims, paragraphs [0031], [0062], [0068], examples | 1-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2023/008041

C. DOCUMENTS CONSIDERED TO BE RELEVANT

| Category* | Citation of document, with indication, where appropriate, of the relevant passages | Relevant to claim No. |
|---|---|---|
| X | JP 51-1556 A (BAYER AG) 08 January 1976 (1976-01-08) claims, page 2, lower left column, line 1 from the bottom to lower right column, line 4, page 5, lower left column, line 4 to lower right column, line 5, examples | 1-7 |
| A | WO 2022/024808 A1 (MITSUBISHI ENGINEERING PLASTICS CORP.) 03 February 2022 (2022-02-03) entire text | 1-7 |

Form PCT/ISA/210 (second sheet) (January 2015)

**INTERNATIONAL SEARCH REPORT**
**Information on patent family members**

International application No.
**PCT/JP2023/008041**

| Patent document cited in search report | Publication date (day/month/year) | Patent family member(s) | Publication date (day/month/year) |
|---|---|---|---|
| JP 2017-179331 A | 05 October 2017 | (Family: none) | |
| JP 2017-218567 A | 14 December 2017 | (Family: none) | |
| JP 2020-138451 A | 03 September 2020 | (Family: none) | |
| JP 2019-195137 A | 07 November 2019 | (Family: none) | |
| JP 51-1556 A | 08 January 1976 | US 3880783 A<br>claims, column 1, lines 56-61, column 3, line 54 to column 4, line 3, examples<br>GB 1449870 A<br>DE 2329646 A1<br>FR 2234350 A1 | |
| WO 2022/024808 A1 | 03 February 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013102512 A
- JP 2019195137 A


### Non-patent literature cited in the description


- *Macromol. Chem.*, 1965, vol. 88, 215